# EUROPEAN PATENT APPLICATION

(11) **EP 2 615 762 A1**
(43) Date of publication of application: **17.07.2013**
(21) Application number: 11823006.9
(22) Date of filing: 26.04.2011
(51) Int. Cl.: H04L 1/18

(54) **METHOD AND APPARATUS FOR PROCESSING HYBRID AUTOMATIC REPEAT REQUEST**

(30) Priority: 09.09.2010 CN 201010279760
(71) Applicant: ZTE Corporation, Shenzhen, Guangdong 518057 (CN)
(72) Inventor: TAN, Yuanchun, Shenzhen Guangdong 518057 (CN); PENG, Focai, Shenzhen Guangdong 518057 (CN)
(74) Representative: Jansen, Cornelis Marinus
(86) International application number: PCT/CN2011/073302
(87) International publication number: WO 2012/031483

(57) **Abstract**

The disclosure discloses a method for processing a Hybrid Automatic Repeat Request (HARQ), which includes: a base station schedules new data (TBSnew) of a User Equipment (UE) by using an idle downlink HARQ process (HARQnew), performs first transmission for the TBSnew through a Modulation and Coding Scheme (MCS) and a Resource Block (RB), and stores a sub-frame type for the HARQnew first transmission (101); after receiving a Negative Acknowledgment (NACK) or Discontinuous Transmission (DTX) feedback for the HARQnew first transmission from the UE, the base station retransmits the TBSnew to be retransmitted on a sub-frame which has the same type with the sub-frame for the HARQnew first transmission, and retransmits TBSnew through the MCS and RB (102). The disclosure also discloses an apparatus for processing an HARQ. The method and apparatus of the disclosure effectively improve the reliability of downlink HARQ transmission.

## Description

### TECHNICAL FIELD

The disclosure relates to Hybrid Automatic Repeat Request (HARQ) technology in the field of communications, and more particularly to a method and an apparatus for processing an HARQ.

### BACKGROUND

The HARQ technology is physical layer transmission technology that includes two combining types, i.e. Chase Combining (CC) and Incremental Redundancy (IR). HARQ combining gain can be obtained by HARQ retransmission, and different HARQ combining gain is obtained when HARQ combining types are different.

In a Long Term Evolution (LTE) system, for downlink HARQ first transmission, the Transport Block Size (TBS) is determined by a Modulation and Coding Scheme (MCS) and the number of Resource Blocks (RBs) used by the HARQ. For a downlink HARQ retransmission, it is unnecessary to notify a User Equipment (UE) of TBS information of the HARQ transmission, or the TBS information of the HARQ transmission may be notified to the UE again by a method the same as that for the HARQ first transmission.

There is a special sub-frame in an LTE Time-Division Duplexing (TDD) mode, and the number of downlink Orthogonal Frequency-Division Multiplexing (OFDM) symbols on the special sub-frame is less than the number of downlink OFDM symbols on a downlink sub-frame. Therefore, it is stipulated in the current 3^{rd} Generation Partnership Project (3GPP) specifications that the number of RBs on a special sub-frame capable of transmitting a Physical Downlink Shared Channel (PDSCH) can be converted into the number of RBs on a downlink sub-frame by a formula *N_{PRB}* = max{_{└}N'_{PRB}×0.75_{┘}, 1}, where *N'*_{PRB} indicates the number of RBs on the special sub-frame, *N_{PRB}* indicates the number of RBs on the downlink sub-frame, and └ ┘ represents a round-down operation. The TBS of downlink HARQ first transmission on the special sub-frame is determined by the MCS used by the HARQ and the converted number of RBs. For downlink HARQ retransmission on the special sub-frame, it is unnecessary to notify a UE of the TBS information of the HARQ transmission, or the TBS information of the HARQ transmission may be notified to the UE again by a method the same as that for the HARQ first transmission.

In practice, when a UE fails to work out Downlink Control Information (DCI) of downlink transmission and therefore an acknowledgment (ACK)/Negative acknowledgment (NACK) is not fed back for an HARQ corresponding to the DCI, the fact that the HARQ is a Discontinuous Transmission (DTX) feedback is detected by a base station. In addition, a DTX feedback may be detected by mistake according to an ACK/NACK feedback.

In the LTE TDD mode, the same HARQ process is possibly performed successively on a downlink sub-frame and a special sub-frame during a first transmission and a subsequent retransmission. In this case, when a UE receives an HARQ first transmission but fails to work out the corresponding DCI information, the UE will fail to obtain TBS information of the HARQ transmission, thus resulting in the following problem: when the first transmission is performed on a special sub-frame and the number of the distributed RBs is not a multiple of 4, the TBS information of the previous HARQ first transmission cannot be notified to the UE when the retransmission is performed on the downlink sub-frame. Similarly, when the first transmission is performed on the downlink sub-frame and the number of the distributed RBs is not a multiple of 3, the TBS information of the previous HARQ first transmission cannot be notified to the UE when the retransmission is performed on the special sub-frame. The aforementioned problem may affect the reliability of HARQ transmission.

### SUMMARY

In view of this, the main purpose of the disclosure is to provide a method and an apparatus for processing an HARQ, so as to improve the HARQ transmission reliability.

To achieve the purpose above, the technical scheme of the disclosure is realized by the following way.

The disclosure provides a method for processing an HARQ, and the method includes:
a base station schedules new data (TBSnew) of a UE by using an idle downlink HARQ process (HARQnew), performs first transmission for the TBSnew through an MCS and an RB, and stores a sub-frame type for HARQnew first transmission;
after receiving a NACK or DTX feedback about the HARQnew first transmission from the UE, the base station retransmits the TBSnew to be retransmitted on a sub-frame which has the same type with the sub-frame for the HARQnew first transmission, and retransmit the TBSnew through the MCS and the RB,
wherein the sub-frame type for the HARQnew first transmission includes a special sub-frame and a downlink sub-frame.

The method may further include:
when the sub-frame type for the HARQnew first transmission is a downlink sub-frame and the number of RBs for the HARQnew first transmission is a multiple of 3, the HARQnew is further retransmitted on a special sub-frame and the TBSnew is retransmitted through the MCS and 4/3 times of the number of the RBs.

The method may further include:
when the sub-frame type for the HARQnew first transmission is a special sub-frame and the number of RBs for the HARQnew first transmission is a multiple of 4, the HARQnew is further retransmitted on a downlink sub-frame and the TBSnew is retransmitted through the MCS and 3/4 of the number of the RBs.

The disclosure further provides an apparatus for processing an HARQ, and the apparatus includes:
an HARQ information storage module configured to store scheduling information of an HARQ process; wherein the scheduling information includes an MCS and the number of RBs;
an HARQ retransmission processing module configured to schedule TBSnew of a UE by using a HARQnew, perform first transmission for the TBSnew through the MCS and an RB, and store a sub-frame type for HARQnew first transmission, and further configured to, after receiving a NACK or DTX feedback about the HARQnew first transmission from the UE, retransmit the TBSnew to be retransmitted on a sub-frame which has the same type with the sub-frame for the HARQnew first transmission, and retransmit the TBSnew through the MCS and the RB.

The sub-frame type for the HARQnew first transmission may include a special sub-frame and a downlink sub-frame.

The HARQ retransmission processing module may be further configured to, when the sub-frame type for the HARQnew first transmission is a downlink sub-frame and the number of RBs for the HARQnew first transmission is a multiple of 3, further retransmit the HARQnew on a special sub-frame and retransmit the TBSnew through the MCS and 4/3 times of the number of the RBs.

The HARQ retransmission processing module may be further configured to, when the sub-frame type for the HARQnew first transmission is a special sub-frame and the number of RBs for the HARQnew first transmission is a multiple of 4, further retransmit the HARQnew on a downlink sub-frame and retransmit the TBSnew through the MCS and 3/4 of the number of the RBs.

When receiving a NACK or DTX feedback about the HARQnew first transmission, a method and an apparatus for processing an HARQ according to the disclosure retransmit TBSnew to be transmitted on a sub-frame which has the same type with a sub-frame for the HARQnew first transmission and transmits the TBSnew by using an MCS and an RB. Through the disclosure, the problem that TBS information retransmitted by an HARQ process cannot be further obtained when a UE fails to obtain TBS information transmitted for the first time by the HARQ process, thus effectively improving the reliability of downlink HARQ transmission.

### BRIEF DESCRIPTION OF THE DRAWINGS

Fig. 1 is a flowchart of a method for processing an HARQ according to the present disclosure;
Fig. 2 is an illustration diagram of the first embodiment;
Fig. 3 is the first illustration diagram of the second embodiment;
Fig. 4 is the second illustration diagram of the second embodiment; and
Fig. 5 is a diagram illustrating a composition structure of an apparatus for processing an HARQ according to the present disclosure.

### DETAILED DESCRIPTION

The technical scheme of the disclosure will be described in details below in combination with the accompanying drawings and embodiments.

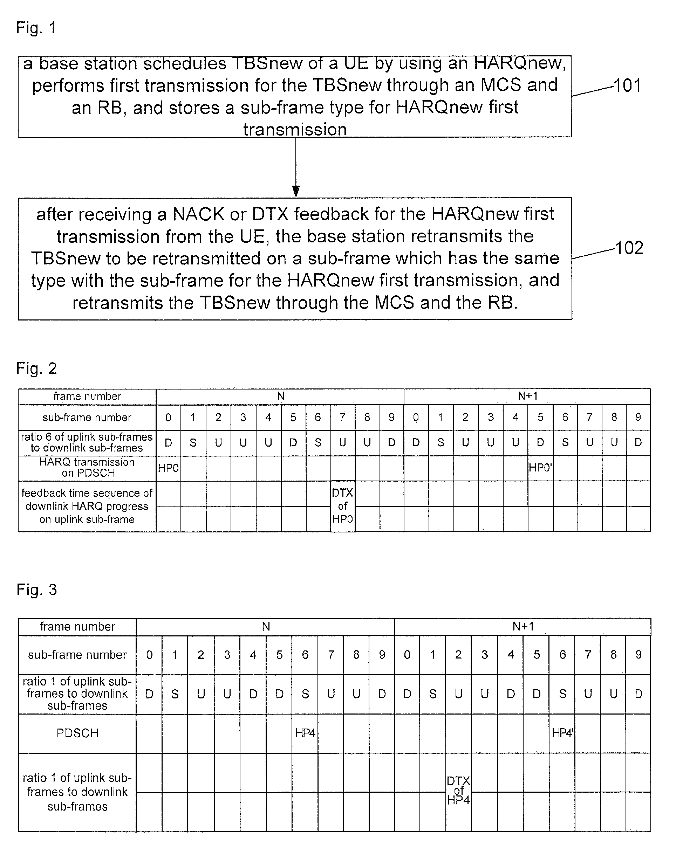

To solve the problem that TBS information retransmitted by an HARQ process cannot be further obtained when a UE fails to obtain TBS information transmitted for the first time by the HARQ process, a method for processing an HARQ according to the disclosure mainly includes the following steps as shown in Fig. 1:
Step 101: a base station schedules new data (TBSnew) of a UE by using an idle downlink HARQ process (HARQnew), performs first transmission for the TBSnew through an MCS and an RB, and stores a sub-frame type for HARQnew first transmission; the sub-frame type includes a special sub-frame and a downlink sub-frame, and the TBS size of the TBSnew is determined by the MCS and the number of RBs;
Step 102: after receiving a NACK or DTX feedback for the HARQnew first transmission from the UE, the base station places the TBSnew to be retransmitted on a sub-frame which has the same type with the sub-frame for the HARQnew first transmission, and retransmits the TBSnew through the MCS and the RB (the TBS size of the TBSnew is notified to the UE through the MCS and the RB).

Further, the number of RBs and the sub-frame type for the HARQnew first transmission can be determined,
when the sub-frame type for the HARQnew first transmission is a downlink sub-frame and the number of RBs for the HARQnew first transmission is a multiple of 3, the HARQnew may be further retransmitted on a special sub-frame and the TBSnew is retransmitted through the MCS and 4/3 times of the number of the RBs;
when the sub-frame type for the HARQnew first transmission is a special sub-frame and the number of RBs for the HARQnew first transmission is a multiple of 4, the HARQnew may be further retransmitted on a downlink sub-frame and the TBSnew is retransmitted through the MCS and 3/4 of the number of the RBs.

The above method for processing an HARQ will be described in details below in combination with the embodiments.

In an LTE TDD system of the first embodiment of the disclosure, the ratio of uplink sub-frames to downlink sub-frames is 6 and the HARQ is processed by the following operations:
Step a1: a base station schedules new data (TBSnew0, corresponding to HP0 in sub-frame 0 of frame N in Fig. 2) of a UE by using an idle downlink HARQ process 0 (HARQnew0) in sub-frame 0 of frame 0, performs first transmission for the TBSnew0 through an MCS (MCS new0) and 10 RBs (RBNumnew0), and stores a sub-frame type for the HARQnew0 first transmission as a downlink sub-frame (in Fig. 2, D indicates a downlink sub-frame, U indicates an uplink sub-frame and S indicates a special sub-frame, wherein sub-frame 0 of frame N is a downlink sub-frame).
Step a2: at sub-frame 7 of frame 0, the base station receives feedback information for the HARQnew0 from the UE, which is a NACK or a DTX (corresponding to the DTC fed back at the sub-frame 7 of frame N in Fig. 2). Therefore, the base station places the TBSnew0 to be transmitted on a sub-frame which has the same sub-frame type with the sub-frame for the HARQnew0 first transmission and retransmits the TBSnew0, i.e. the retransmission needs to be performed on a downlink sub-frame and the TBS size of the TBSnew0 is notified to the UE by the MCS and the RBs. The TBSnew0 is retransmitted (HP0' indicates the retransmitted TBSnew0 in Fig. 2) on sub-frame 5 of frame 1 (corresponding to frame N+1 in Fig. 2).

Further, the number of RBs and the sub-frame type for the HARQnew0 first transmission are determined. The sub-frame type for the HARQnew0 first transmission is a downlink sub-frame, but the number of RBs is not a multiple of 3. Therefore, the HARQnew0 cannot be retransmitted on a special sub-frame.

In an LTE TDD system of the second embodiment of the disclosure, the ratio of uplink sub-frames to downlink sub-frames is 1 and the HARQ is processed by the following operations:
Step b1: a base station schedules new data (TBSnew4, corresponding to HP4 in sub-frame 6 of frame N in Fig. 3) of a UE by using an idle downlink HARQ process 4 (HARQnew4) in sub-frame 6 of frame N, performs first transmission for the TBSnew4 through an MCS (MCS new4) and 4 RBs (RBNumnew4), and stores a sub-frame type for the HARQnew4 first transmission as a special sub-frame (sub-frame 6 of frame N is a special sub-frame).
Step b2: at sub-frame 2 of frame N+1, the base station receives feedback information for the HARQnew4 from the UE, which is DTX (corresponding to the DTX of HP4 in Fig. 3). Therefore, the base station places the TBSnew4 to be retransmitted on a sub-frame which has the same sub-frame type with the sub-frame for the HARQnew4 first transmission and retransmits the TBSnew4, i.e. the retransmission needs to be performed on a special sub-frame through the MCS and 4 RBs, and the TBS size of the TBSnew4 is notified to the UE by the MCS and the RBs. The TBSnew4 is retransmitted (HP4' indicates the retransmitted TBSnew4 in Fig. 3) on sub-frame 6 of frame N+1.

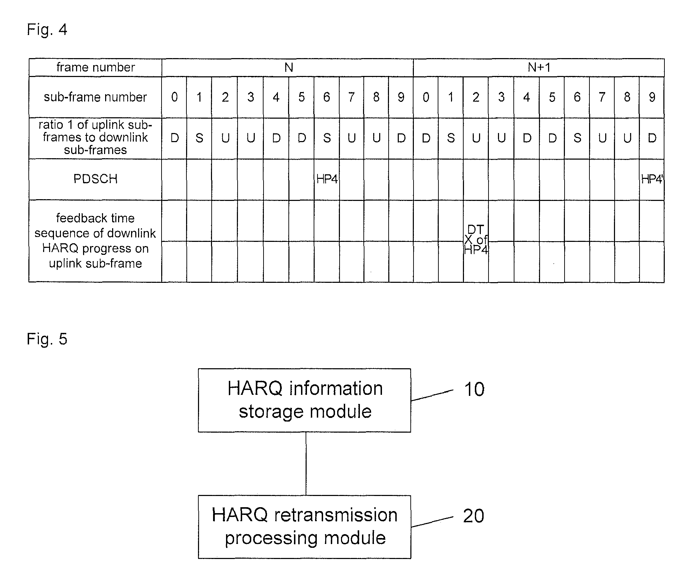

Further, the number and the sub-frame type for the HARQnew4 first transmission are determined. The sub-frame (sub-frame 6 of frame N in Fig. 3) type for the HARQnew4 first transmission is a special sub-frame, and the RBNumnew4 is 4 which is a multiple of 4. Therefore, the HARQnew4 may be further retransmitted on a downlink sub-frame (as shown in Fig. 4, the HARQnew4 is retransmitted through sub-frame 9 of frame N+1), and the TBSnew4 is retransmitted through the MCS and 3 RBs, as shown in Fig. 4.

Corresponding to the above method for processing an HARQ, the disclosure further provides an apparatus for processing an HARQ. As shown in Fig. 5, the apparatus includes an HARQ information storage module 10 and an HARQ retransmission processing module 20, wherein the HARQ information storage module 10 is configured to store scheduling information of an HARQ process. The scheduling information includes an MCS, the number of RBs and a TBS size. The HARQ retransmission processing module 20 is configured to schedule TBSnew of a UE by using HARQnew, perform first transmission for the TBSnew through an MCS and an RB, and store a sub-frame type (a special sub-frame or a downlink sub-frame) for HARQnew first transmission, and further configured to, after receiving a NACK or DTX feedback for the HARQnew first transmission from the UE, place the TBSnew to be retransmitted on a sub-frame which has the same type with the sub-frame for the HARQnew first transmission, and retransmit the TBSnew through the MCS and the RB.

Preferably, the HARQ retransmission processing module 20 is further configured to, when the sub-frame type for the HARQnew first transmission is a downlink sub-frame and the number of RBs for the HARQnew first transmission is a multiple of 3, further retransmit the HARQnew on a special sub-frame and retransmit the TBSnew through the MCS and 4/3 times of the number of the RBs;
when the sub-frame type for the HARQnew first transmission is a special sub-frame and the number of RBs for the HARQnew first transmission is a multiple of 4, further retransmit the HARQnew on a downlink sub-frame and retransmit the TBSnew through the MCS and 3/4 of the number of the RBs.

The above are only preferred embodiments of the disclosure and should not be used to limit the disclosure.

## Claims

1. A method for processing a Hybrid Automatic Repeat Request (HARQ), comprising:
scheduling, by a base station, new data (TBSnew) of a UE by using an idle downlink HARQ process (HARQnew), performing first transmission for the TBSnew through a Modulation and Coding Scheme (MCS) and a Resource Block (RB), and storing a sub-frame type for HARQnew first transmission;
after the base station receives a non-acknowledgment (NACK) or a Discontinuous Transmission (DTX) feedback for the HARQnew first transmission from the UE, placing, by the base station, the TBSnew to be retransmitted on a sub-frame which has the same type with the sub-frame for the HARQnew first transmission, and retransmitting the TBSnew through the MCS and the RB.

2. The method for processing an HARQ according to claim 1, wherein the sub-frame type for the HARQnew first transmission comprises a special sub-frame and a downlink sub-frame.

3. The method for processing an HARQ according to claim 2, further comprising:
when the sub-frame type for the HARQnew first transmission is a downlink sub-frame and the number of RBs for the HARQnew first transmission is a multiple of 3, further retransmitting the HARQnew on a special sub-frame, and retransmitting the TBSnew through the MCS and 4/3 times of the number of the RBs.

4. The method for processing an HARQ according to claim 2, further comprising:
when the sub-frame type for the HARQnew first transmission is a special sub-frame and the number of RBs for the HARQnew first transmission is a multiple of 4, further retransmitting the HARQnew on a downlink sub-frame, and retransmitting the TBSnew through the MCS and 3/4 of the number of the RBs.

5. An apparatus for processing a Hybrid Automatic Repeat Request (HARQ), comprising:
an HARQ information storage module configured to store scheduling information of an HARQ process, wherein the scheduling information comprises a Modulation and Coding Scheme (MCS) and the number of Resource Blocks (RBs);
an HARQ retransmission processing module configured to schedule TBSnew of a UE by using an idle downlink HARQ process (HARQnew), perform first transmission for the TBSnew through the MCS and an RB, and store a sub-frame type for HARQnew first transmission, and further configured to, after receiving a non-acknowledgment (NACK) or Discontinuous Transmission (DTX) feedback for the HARQnew first transmission from the UE, place the TBSnew to be retransmitted on a sub-frame which has the same type with the sub-frame for the HARQnew first transmission, and retransmit the TBSnew through the MCS and the RB.

6. The apparatus for processing an HARQ according to claim 5, wherein the sub-frame type for the HARQnew first transmission comprises a special sub-frame and a downlink sub-frame.

7. The apparatus for processing an HARQ according to claim 6, wherein the HARQ retransmission processing module is further configured to, when the sub-frame type for the HARQnew first transmission is a downlink sub-frame and the number of RBs for the HARQnew first transmission is a multiple of 3, further retransmit the HARQnew on a special sub-frame, and retransmit the TBSnew through the MCS and 4/3 times of the number of the RBs.

8. The apparatus for processing an HARQ according to claim 6, wherein The HARQ retransmission processing module is further configured to, when the sub-frame type for the HARQnew first transmission is a special sub-frame and the number of RBs for the HARQnew first transmission is a multiple of 4, further retransmit the HARQnew on a downlink sub-frame, and retransmit the TBSnew through the MCS and 3/4 of the number of the RBs.
